# EUROPEAN PATENT APPLICATION

(11) **EP 3 524 845 A1**
(43) Date of publication of application: **14.08.2019**
(21) Application number: 18156102.8
(22) Date of filing: 09.02.2018
(51) Int. Cl.: F16F 7/108, B62D 37/04

(54) **A FREQUENCY TUNED DAMPER, A DAMPER ASSEMBLY, AND A METHOD FOR MAKING SUCH A DAMPER**

(71) Applicant: Vibracoustic Forsheda AB, 331 71 Forsheda (SE)
(72) Inventor: Gustafsson, Rickard, 331 94 Värnamo (SE)
(74) Representative: AWA Sweden AB

(57) **Abstract**

A frequency tuned damper (10) comprises two elastic damper elements (30) which are arranged to be connected to a vibrating structure, the vibrations of which are to be dampened, and at least one mass element (20) extending in a longitudinal direction of the damper (20) between two opposite ends thereof and being elastically supported at each one of said ends via an associated one of said two elastic damper elements (30). Each one of two intermediate connector elements (50) has a first engagement side which is in direct engagement with an associated one of said opposite ends of the mass element (20) by being press-fitted over the associated end along the longitudinal direction, and an opposite second engagement side which is in engagement with an associated one of said two elastic damper elements (30). An assembly including such a damper (10), as well as a method for making such a damper (10), are also disclosed.

## Description

### TECHNICAL FIELD

The present disclosure relates to the field of frequency tuned dampers, also known as tuned mass dampers or tuned vibration dampers. Such dampers can be mounted in structures, for instance in a motor vehicle, to reduce the amplitude of vibrations in the structure. The present inventive concept is related to a tuned damper assembly and to a method for assembling such a damper assembly.

### BACKGROUND

The function of frequency tuned vibration dampers is based on a dampened spring-mass system which counteracts and reduces vibrations in a structure or surface to which the damper is connected. Such vibrations may be in directions WO 01/92752 A1, WO 2013/167524 A1, and WO 2008/127157 A1 disclose examples of frequency tuned vibration dampers.

A known type of a frequency tuned damper comprises a longitudinal vibration body or mass element which at its two opposite ends is elastically supported in a console or fixture via two elastic damper elements. The mass element is typically made at least in part from metal, such as steel. The elastic damper elements are typically made from an elastic material comprising rubber, such as silicon rubber. The mass element and the two elastic damper elements are together frequency tuned to one or more resonance frequencies matching the frequency or frequencies of the vibrating structure which are to be dampened. During the damping operation, the elastically supported mass element will vibrate out or phase with the vibrations of the structure, thereby reducing or absorbing the vibrations thereof.

In such known vibration dampers, the elastic damper elements are typically attached to the end surfaces of the metal mass element by vulcanization. Therefore, the metal mass element has to be cleaned and blasted in order to make it possible to attach the elastic element by vulcanization. This cleaning operation as well as the vulcanization operation as such involves added manufacturing cost and time.

It is also known to attach the silicon rubber elements to the ends of the mass element via screw connections, using screws which engage machined screw holes in the mass element. This solution suffers also from disadvantages in terms of added manufacturing cost and time. The ends of the metal mass element must be prepared with threaded holes or openings, and the screw connection as such is also a time consuming manufacturing step. Also, special expensive screws are often needed.

### SUMMARY OF INVENTION

In the light of the above, it is an object of the present inventive concept to provide a frequency-tuned damper, a frequency tuned damper assembly, and a method for making a frequency tuned damper, wherein the above-mentioned disadvantages of the prior art are addressed.

According to a first aspect of the inventive concept, there is provided a frequency tuned damper comprising:
two elastic damper elements which are arranged to be connected to a vibrating structure, the vibrations of which are to be dampened;
at least one mass element extending in a longitudinal direction of the damper between two opposite ends thereof and being elastically supported at each one of said ends via an associated one of said two elastic damper elements;
two intermediate connector elements, wherein each one of said two intermediate connector elements has a first engagement side which is in direct engagement with an associated one of said opposite ends of the mass element by being press-fitted over the associated end along the longitudinal direction, and an opposite second engagement side which is in engagement with an associated one of said two elastic damper elements.

According to a second aspect of the inventive concept, there is provided a frequency tuned damper assembly, comprising:
a frequency tuned damper as defined above; and
a console having two support portions which are located at a distance from each other along the longitudinal direction of the damper and which are arranged to support the mass element therebetween via said elastic damper elements and said intermediate connector elements.
   The console may be arranged to be connected to the vibrating structure the vibrations of which are to be dampened. In some embodiments, the console may also be an integral part of the vibrating structure.

According to a third aspect of the inventive concept, there is provided a method for making a frequency tuned damper, comprising:
providing at least one mass element which extends in a longitudinal direction between two opposite ends thereof;
providing two connector elements, each connector element having a first engagement side and an opposite second engagement side;
providing two elastic damper elements;
press-fitting the first engagement side of each connector element over an associated one of said opposite ends of the mass element for providing an engagement between each connector element and the mass element; and providing an engagement between the second engagement side of each connector element and an associated one of said two elastic damper elements.

The order of the above steps may be varied. The connector elements may be press-fitted to the mass element as a first step. As an alternative, it is also possible to first bring the elastic damper elements into engagement with the associated connector elements to form two sub-assemblies, and thereafter to press-fit the connector element of each such sub-assembly to an associated end of the mass element.

Preferred embodiments of the inventive concept are set out in the dependent claims.

The inventive concept presents at least the following advantages over the prior-art type of frequency tuned dampers mentioned above:
- The inventive concept of using the intermediate connector elements makes it possible to avoid the manufacturing time and cost for cleaning and blasting the metal mass elements during the manufacturing process. Metal elements with an untreated and rougher surface may be used. Untreated raw steel material may be cut to suitable lengths and thereafter be used directly in the assembly without any surface treatment. In the inventive design, the elastic damper elements are moved away from the mass element and do not have to be directly connected to the mass element as in the prior art.
- The intermediate connector elements can be manufactured to a low cost from any suitable material, e.g. synthetic resin, such as thermoplastic materials or thermosetting materials.
- During the manufacturing process, the connector elements are quickly and easily attached to the ends of the mass element by press-fitting, without the need for any additional connection means between the metal surface and the connector elements, such as adhesives or screws, and without the need for forming threaded screw holes in the ends of the metal mass elements.
- In a manufacturing process involving the making of dampers tuned to different resonance frequencies, mass elements of different length but with the same cross section may be used and connected to one standard-type of connector element.
- Each connector element has a first engagement side engaging the mass element by a press-fit engagement, and an opposite second side engaging the elastic damper element. By using separate intermediate connector elements in the damper for engaging the elastic damper elements, the engagement with the elastic damper elements may be varied in many ways as will be described below without any machining or the like of the mass element, resulting in additional flexibility and reduced manufacturing cost and time with respect to the design of different dampers.
- When the assembled damper, in which the connector elements have been press-fitted over the opposite ends of the mass element, is mounted between opposite support portions of a console, the assembly of the damper can be automatically and effectively locked in the longitudinal direction as a direct result of the damper being mounted in the console, preventing the connector elements from being axially disconnected from the mass element.

### Embodiments of the inventive concept

In preferred embodiments, each intermediate connector element may comprise on its first engagement side at least one mass-engaging sleeve forming a mass-receiving cavity into which the associated end of said at least one mass element is inserted with a press-fit engagement with the mass-engaging sleeve. In such embodiments, each intermediate connector element may also comprise an intermediate wall which is integrally formed with said at least one mass-engaging sleeve, and which extends transversally to said longitudinal direction between the associated end of the mass element and the associated elastic damper element.

In preferred embodiments, an outer periphery of such an intermediate wall of each connector element may correspond substantially to an outer periphery of the associated end of the mass element.

In some embodiments, for providing the engagement between the second engagement side of each connector element and the associated elastic damper element,
- the damper is arranged in a supporting console which exerts a biasing force on each one of the elastic damper elements along the longitudinal direction towards the mass element; and
- each elastic damper element comprises at least one angled engagement portion which extends at an angle to the longitudinal direction and which is in contact with the second engagement side of the associated intermediate connector element, said angled engagement portion being arranged to convert part of said biasing force into a transverse engagement force biasing the angled engagement portion against the connector element in a direction transvers to the longitudinal direction.
- In such embodiments, each elastic damper element is thus held in a biased state in which the elastic damper element is held elastically compressed in the longitudinal direction.

In such embodiments, each intermediate connector element may on its second engagement side comprise a second sleeve forming a second cavity into which at least a part of the associated elastic damper element is received, wherein each elastic damper element comprises a center portion which extends transversally to the longitudinal direction, and a flaring skirt portion forming said angled engagement portion, said skirt portion extending at an angle from an outer periphery of the center portion and presenting an outer periphery which is biased against an inner side of the second sleeve.

An advantage of this solution of engaging the elastic damper element with the connector element is that the use of vulcanization and/or adhesives may be completely avoided, as well as the need for any screw connections. The biasing forces acting in the longitudinal direction on the elastic damper elements are at least partly converted into transverse engagement forces for establishing the engagement between the elastic damper elements and the connector elements. A special advantage of this solution is that this engagement between the elastic damper elements and the connector elements may be automatically achieved as a direct and automatic result of mounting the damper in the console, creating the biasing forces in the longitudinal direction, thereby further reducing manufacturing time.

According to another embodiment, for providing said engagement between the second engagement side of each one of the two connector elements and the associated elastic damper element, each elastic damper element may as an alternative be vulcanized to the second engagement side of the associated connector element, or attached by a suitable adhesive.

Preferably, the connector elements are made from more rigid material than the elastic damper elements. The elastic elements can be made from a material comprising silicon rubber, and the connector elements can be made from a material comprising a synthetic resin, such as thermoplastic materials or thermosetting materials. The at least one mass element can be made from any material having a required density, such as metal.

In some embodiments, each connector element may on its second engagement side comprise a deflection limiter which extends into an opening of an associated one of the elastic damper elements, and which is arranged to limit the degree of movement of the damper transvers to said longitudinal direction if the damper is subjected to an external transient force sufficient to bring the deflection limiter into contact with the elastic damper element. Thereby, excessive movements of the elastic damper elements may be prevented.

In some embodiments, the damper comprises two or more mass elements which extend in parallel to each other in said longitudinal direction between the two connector elements. In such a multi-mass element embodiment, the first engagement side of each connector element may be brought into direct engagement with the two or more mass elements by being press-fitted over the ends thereof along the longitudinal direction. In such embodiments, each connector element may comprise a plurality of mass-receiving cavities.

Such a design makes it possible to design frequency tuned dampers which may be tuned in larger "tuning steps" by adding or removing one or more of the mass elements as will be described below. The user may choose the number of mass-elements and the length of these in order to tune the damper to desired a frequency.

An advantage of dividing the mass elements into a plurality of smaller mass elements is that it may be cheaper to use smaller mass elements than one bigger since cheaper rod-material may be used and cut into desired length units.

In preferred embodiments of the assembly method, the damper is mounted in a supporting console having two opposite support portions arranged to exert a biasing force on each one of the elastic damper elements along the longitudinal direction towards the mass element, for providing said engagement between the second engagement side of each one of the two intermediate connector elements and the associated elastic damper element.

### BRIEF DESCRIPTION OF THE DRAWINGS

The inventive concept, some non-limiting preferred embodiments, and further advantages of the inventive concept will now be described with reference to the drawings in which:
- Figs 1A to 1C: illustrate a first embodiment of a frequency tuned damper.
- Figs 2A and 2B: illustrate an elastic damper element.
- Figs 3A to 3C: illustrate a connector element.
- Figs 4A to 4C: illustrate a console.
- Figs 5A to 5C: illustrate assembly steps.
- Figs 6A and 6B: are sectional views illustrating the assembly of the damper assembly in Figs 4A to 4C.
- Figs 7A to 7D: illustrate a snap-lock mechanism for mounting a damper in a console.
- Figs 8A and 8B: illustrate a deflection limiting mechanism.
- Figs 9A to 9D: illustrate a second embodiment of a frequency tuned damper.
- Figs 10A to 10C: illustrate variants of the second embodiment in Figs 9A to 9D.
- Figs 11A to 11I: illustrate a third embodiment of a frequency tuned damper.
- Fig. 12: illustrates a variant of the first embodiment in Figs 1A to 1C.
- Fig. 13: illustrates a variant of the second embodiment in Figs 9A to 9D.
- Figs 14A and 14B: illustrate a fourth embodiments of a frequency tuned damper.
- Fig. 15: illustrates a frequency tuned damper with no connector element.7

### DETAILED DESCRIPTION OF PREFERRED EMBODIMENTS

The present inventive concept relates in general to frequency tuned dampers. Such dampers may be used to dampen vibrations in a vibrating surface or structure, such as a vibrating component in the body of a motor vehicle. The damper comprises a mass acting as a vibration body, and at least one elastic damper element. The mass and the at least one elastic damper element together provide a dampened spring-mass system, and may be connected to the vibrating surface, optionally by means of an intermediary component, sometimes referred to as a console.

The weight of the mass, and the stiffness and damping of the elastic damper element are selected to provide a damping effect on the vibrating structure, which can be expected to vibrate at one or more predetermined target frequencies. When the vibrating structure vibrates at a target frequency, the mass or vibration body is caused to oscillate/resonate at the same frequency as the structure but out of phase, such that the vibration of the structure is substantially dampened. The vibration body may vibrate with an amplitude substantially greater than the vibration amplitude of the vibrating structure.

### 1^{st} embodiment

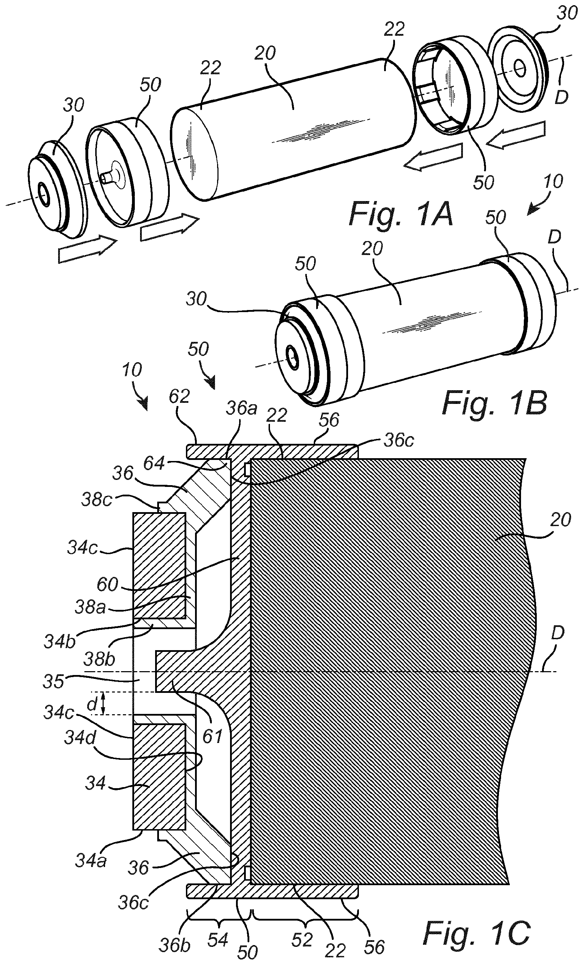

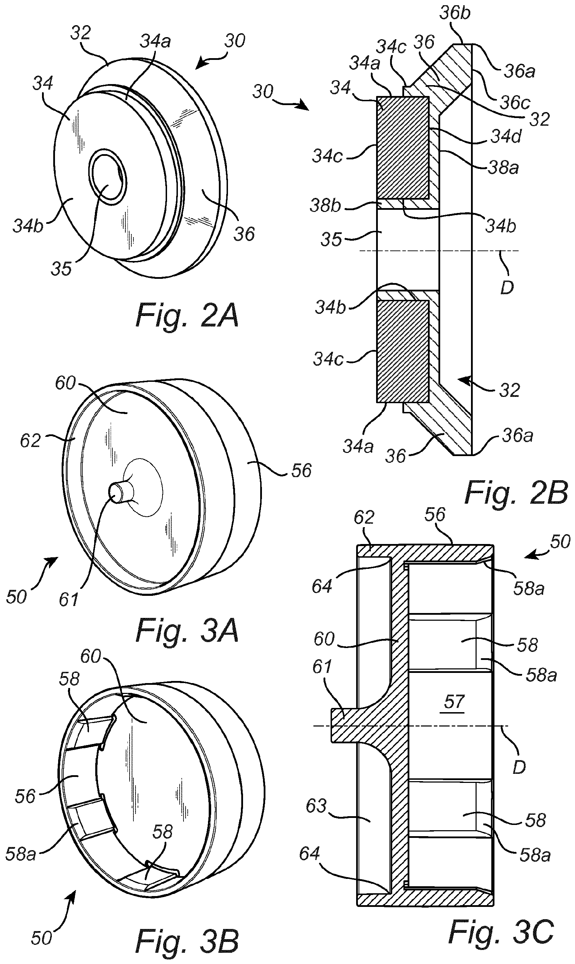

Figs 1A to 1C illustrate a first embodiment of a frequency tuned damper 10. As a non-limiting example, the damper 10 may be used as a tailgate damper in a vehicle. The main components of the damper 10 include a rod-shaped vibration body or mass element 20, two elastic damper elements 30, and two connector elements 50. The line D represents a longitudinal direction of the damper 10, in this case a line of rotational symmetry. Fig 1A is an exploded perspective view of the non-assembled damper 10, Fig. 1B is a perspective view of the assembled damper 10, and Fig. 1C is a sectional view of one end of the assembled damper 10. An elastic element 30 is illustrated in detail in Figs 2A and 2B, and a connector element 50 is illustrated in detail in Figs 3A to 3C.

In Fig. 1A, arrows illustrate how each connector element 50 is arranged to be brought into engagement with an associated end 22 of the mass element 22, and how each elastic damper element 30 is arranged to be brought into engagement with an associated connector element 50.

In the illustrated embodiment in Fig. 1A to 1C, each one of the elements 20, 30 and 50 is circularly symmetrical in relation to the line D. In other embodiments, as in the second and third embodiments described below, these elements may have a non-circular configuration.

As shown in Figs 2A and 2B, in this embodiment the elastic damper element 30 is a two-component element, comprising an elastic component 32 and a more rigid component 34. The elastic component 32 forms the elastic part of the frequency tuned spring-mass system and may typically be made of rubber, such as silicon rubber. The rigid component 34 is typically non-elastic and made of a more rigid material, such as metal or a synthetic resin. The locking component 34 forms a first locking part of a snap-lock mechanism and is arranged to co-operate with a second locking part of the snap-lock mechanism for mounting and locking the damper 10 in a console as will be described in detail below.

When the damper 10 is to be assembled according to Figs 1A and 1B, the elastic component 32 and the rigid component 34 are preferably already united into one unit or sub-assembly forming the elastic damper element 30. According to one alternative, the elastic component 32 may be molded directly onto the rigid component 34. In some embodiments, the elastic component 32 and the rigid component 34 may be manufactured as one integral unit by a 2K process in which the two components are bonded together.

In an alternative embodiment, the two components 32 and 34 are first formed separately and then united in a suitable manner, for instance by adhesive and/or by forming the elastic component 32 with attachment means for mechanically engaging the locking component 34. As an example, the elastic material may be attached to the rigid component 34 by forming through-holes in the rigid component 34 and molding the elastic material into such holes.

In the illustrated embodiment, the rigid mounting component 34 of the damper element 30 has the form of a mounting ring 34 made of metal, a rigid plastic material or any other suitable material which preferably is more rigid or stiff than the material used for the elastic component 32. The mounting ring 34 has a radially outer peripheral engagement surface 34a, a radially inner surface 34b forming a central opening 35 of the mounting ring 34, an axially outer engagement surface 34c facing away from the elastic component 32, and an axially inner surface 34d facing towards the elastic component 32.

The elastic component 32 has at least one angled part 36 to be brought into engagement with the associated connector element 50. In this embodiment, the angled part is in the form of a frusto-conical skirt 36 having a wide end 36a, which faces towards the connector element 50 and which presents two perpendicular engagement surfaces: a radially outer engagement surface 36b and an axially inner engagement surface 36c facing towards the connector element 50. The elastic component 32 further comprises a transversally extending portion 38a covering the axially inner surface 34d of the mounting ring 34, a radially inner tubular portion 38b covering the inner peripheral surface 34b of the mounting ring 34, and a smaller radially outer portion 38c covering a part of the outer peripheral mounting surface 34a of the mounting ring 34. The three parts 38a, 38b and 38c of the elastic component 32 forms a mounting cavity for the mounting ring 34 and may be molded around the mounting ring 34 and/or may be attached to the mounting ring 34 via a suitable adhesive or via vulcanization.

Figs 3A to 3C illustrate a non-limiting embodiment of a connector element 50 for use in the damper 10. The connector element 50 is preferably made from a more rigid material than the elastic component 32, but may preferably also present some limited flexibility for the press-fit engagement with the mass element 20. Preferred materials may comprise synthetic resins, such as thermoplastic materials or thermosetting materials. Each connector element 50 may preferably be made as one integral component as in the illustrated embodiment, but it is also possible to design a connector element from different parts, optionally from different materials.

As shown in Figs. 1C and 3C, the connector element 50 has a first engagement side 52 facing towards the mass element 20 and a second engagement side 54 facing towards the associated elastic damper element 30. The first engagement side 52 is arranged to be in engagement with the mass element 20, whereas the opposite second side 54 of the connector element 50 is arranged to be in engagement with the associated damper element 30. Thereby, each connector element 50 will act as an intermediate connector element 30 between the mass element 30 and the associated damper element 30. This arrangement thus avoids the need for attaching the silicon rubber directly to the mass element 20 as in the prior art. It also opens up for many possible ways of designing the engagement between the second engagement side 54 and the elastic damper element 30.

Each connector element 50 has on its first engagement side 52 a cylindrical mass-engaging sleeve 56 forming a mass-receiving cavity 57 into which an associated end 22 the mass element 20 is to be inserted with a press-fit engagement. In this embodiment, the inside of the sleeve 56 is provided with a plurality of press-fit tabs 58 mutually spaced in the circumferential direction about the axis D. Each press-fit tab 58 has a beveled outer end forming a guide surface 58a for the end 22 of the mass element 20. The radially inner surfaces of the press-fit tabs 58 together form a press-fit surface the diameter of which substantially corresponds to, but is somewhat smaller than the outer diameter of the mass element 20. Thereby, the first engagement side 52 of the connector element 50 may be brought into direct engagement with an associated end 22 of the mass element 20 by press-fitting the engagement sleeve 56 over the associated end 22.

Each connector element 50 further comprises an intermediate wall 60 which in this embodiment is integrally formed with the mass-engaging sleeve 56, and which extends transversally to the longitudinal direction D between the associated end 22 of the mass element 20 and the associated elastic damper element 30. In this embodiment, the periphery of the intermediate wall 60 corresponds essentially to the cross section of the mass element 20. In the final engagement position shown in Fig. 1C, when the connector element 50 has been press-fitted over the end 22 of the mass element 20, the end 22 of the mass element 20 will be in contact with the intermediate wall 60.

Each connector element 50 further comprises a deflection limiter 61, which in this embodiment is integrally formed with the wall 60 and extends in a direction towards the elastic damper element 30 coaxially with the center line D on the second engagement side 54 of the connector element 50.

On its second engagement side 54, each connector element 50 comprises a cylindrical second sleeve 62 forming a second cavity 63 for receiving at least a part of the associated elastic damper element 30. Reference numeral 64 indicates a circumferentially extending inner corner area between the wall 60 and the second sleeve 62.

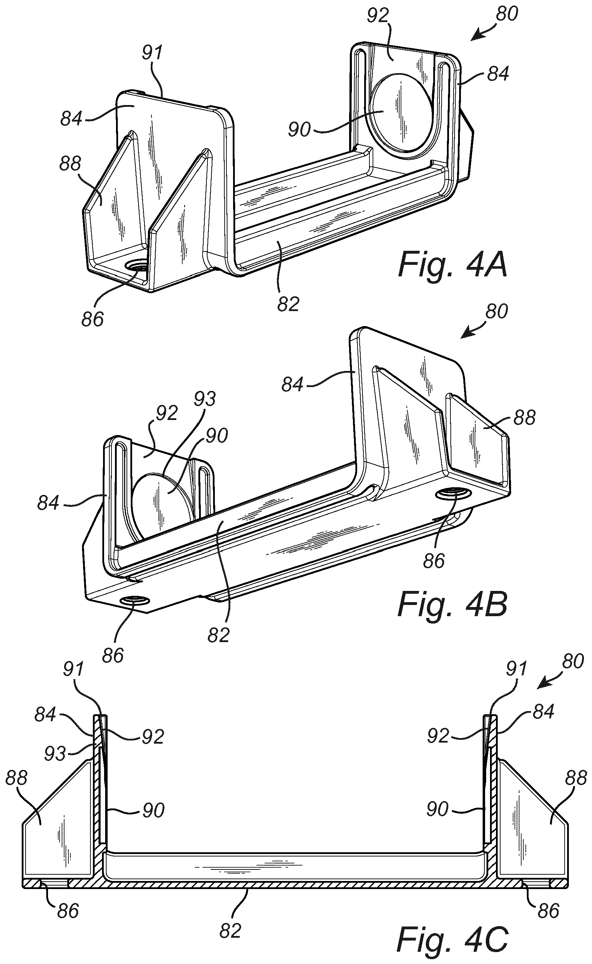

The assembled damper 10 shown in Fig. 1B may be attached to a vibrating surface or structure (not shown) via a supporting console 80 as illustrated in Figs 4A to 4C. The console 80 is essentially U-shaped and comprises a base 82 and two support portions 84 for supporting the damper 10 therebetween. The base 82 is provided with mounting holes 86 for mounting the console 80 to the vibrating structure. In other embodiments, the console or at least the supporting portions 84 may be integrally formed with the vibrating structure, such as a car body. The vibrations to be dampened may typically be directed both in transverse direction in relation to the longitudinal direction D, as well as in the longitudinal direction D. The console 80 may be made from any suitable material, such as metal or a relatively rigid plastic material, and may preferably be made in one integral piece.

Stiffeners 88 are arranged between each support portion 84 and the base 82 for preventing unwanted outward flexing of the support portions 84 when the damper 10 is mounted in the console 80. A damper-receiving mounting recess or cavity 90 is formed in each support portion 84 at the inside thereof. In the preferred embodiment, the shape of the mounting cavities 90 corresponds to the shape of the axially outer mounting surface 34c of the mounting ring 34 so that the mounting ring 34 may be received and locked in the mounting cavity 90 with only a little clearance. As shown in Fig. 4A, the upper side of each support portion 84 has a recess 91 for receiving a mounting ring 34. Each recess 91 continues into a beveled guide surface 92 extending to the mounting cavity 91. The two beveled guide surfaces 92 are arranged at a mutual distance which decreases downward towards the mounting cavity 90. At the location where the beveled guide surface 92 meets the mounting cavity 90, the inside of the support portion 82 presents a step 93, i.e. a sudden decrease in wall thickness.

The manufacture and the assembly of the damper 10, and the subsequent mounting of the assembled damper 10 in the console 80 for forming a final damper assembly 1 will now be described with reference to Figs 1A to 1C, 5A to 5C, 6A and 6B, and 7A to 7D. Before the assembly is initiated, the mass element 20 and the two-component elastic damper elements 30 are manufactured. The two-component elastic damper elements 30 are manufactured as described above. The mass element 20 may preferably be cut from a longitudinal metal body having a substantial uniform cross-section corresponding to the cavities 57 of the connector elements 50. The length of the mass element 20 is cut to a suitable tuning mass/length, and a corresponding console size is selected. A substantial advantage of the concept of using the intermediate connector elements 50 is that no or only a limited surface treatment of the mass element 20 is needed. Especially, blasting will not be needed since the silicon rubber does not have to be directly bonded to the mass element 20.

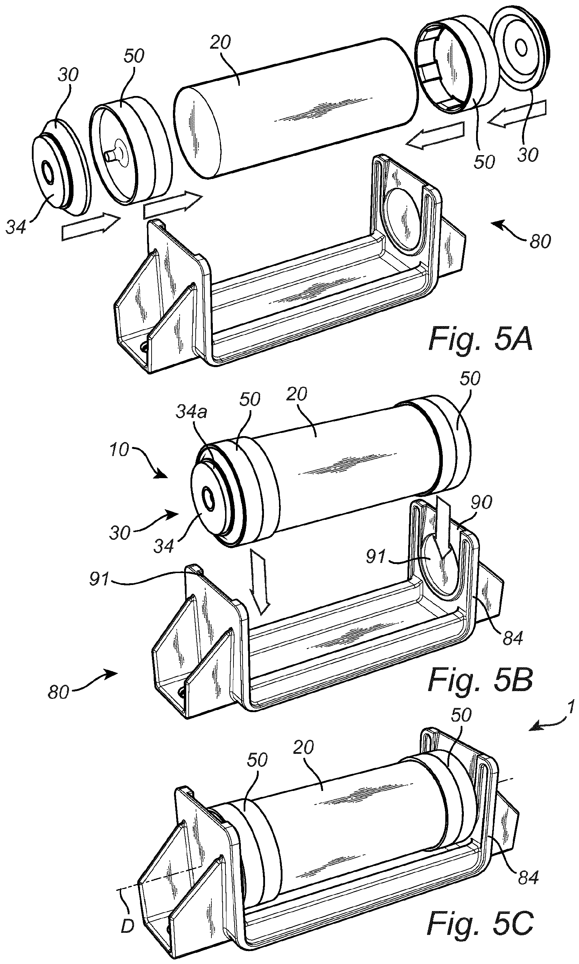

As a first assembly step, the connector elements 50 may be press-fitted onto the ends 22 of the mass element 20, as shown in Figs 1A and 1B, and 5A and 5B. The mass-engagement sleeve 56 is guided over the associated end 22 of the mass element 20 by the beveled surfaces 58a of the press-fit tabs 58, and the end 22 is brought into engagement with the wall 60 of the connector element 50.

As a second assembly step, each elastic damper element 30 is inserted into the second inner cavity 63 of its associated connector element 50. More specifically, the frusto-conical skirt 36 of the elastic component 32 is received in the inner cavity 63 as shown in Fig. 1C such that the wide end 36a of the frusto-conical skirt 36 is brought into contact with the inner corner area 64 of the cavity 63. In this position, the radially outer engagement surface 36b of the elastic component 32 is facing the inside of the second sleeve 62, and the axially inner engagement surface 36c of the elastic component 32 is facing the intermediate wall 60. In this position, as shown in Fig. 1C, the deflection limiter 61 of the connector element 60 is received in the central opening 35 of the mounting ring 34, with a radial distance d between the deflection limiter 61 and the tubular portion 38b of the elastic component 32.

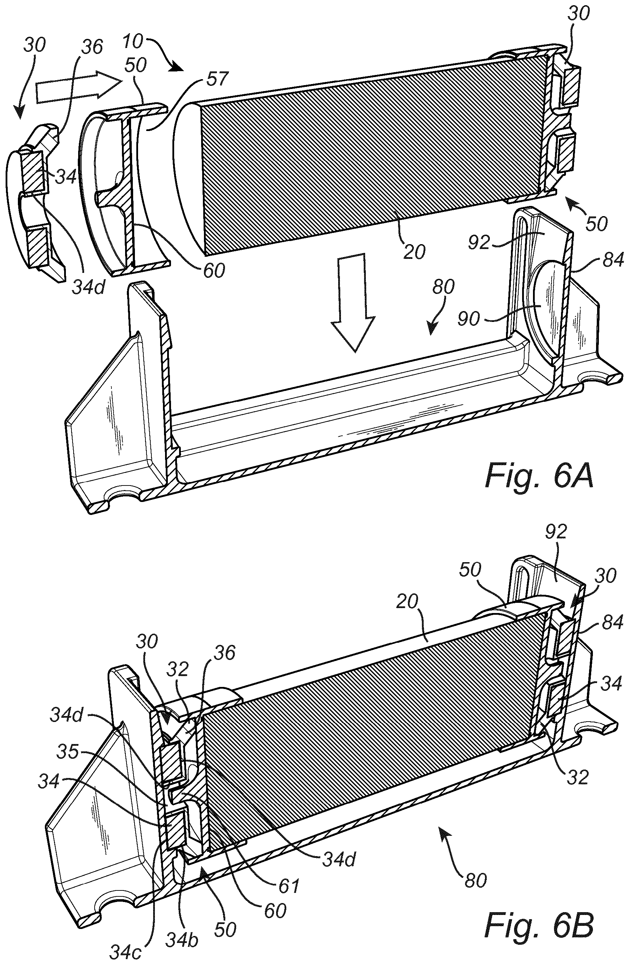

The damper 10 is now assembled as shown in Fig. 1B and is ready for mounting in the console 80. Optionally, the first assembly step and the second assembly step above may be performed in reverse order. The console mounting procedure is illustrated in Figs 5B and 5C, and Figs 6A and 6B. The damper 10 is positioned in relation to the console 80 such that the mounting rings 34 are aligned with the recesses 91 in the support portions 84. Next, the damper 10 is forced by a single transverse movement in relation to the longitudinal direction D into the console 80 to its mounted position in Figs 5C and 6B. Thereby, each mounting ring 34 is received and snap-locked in an associated one of the mounting cavities 90. In the resulting damper assembly 1, each end 22 of the mass element 20 is elastically supported by an associated support portion 84 of the console 80 via an elastic damper element 30 and an intermediate connector element 50. All of the elements 20, 30 and 50 forming the damper 10 are "locked" to each other both in the longitudinal direction and the transverse direction, preventing the damper 10 from being disassembled and preventing the damper 10 from being disconnected from the console 80.

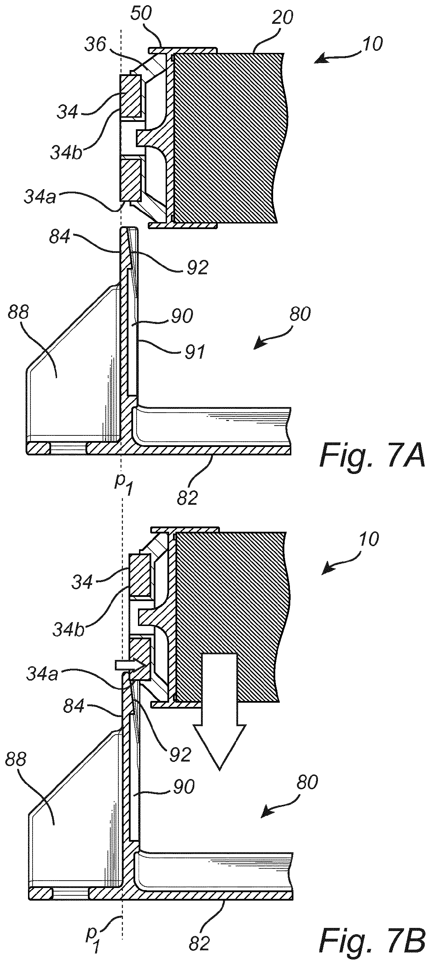

Figs 7A to 7D illustrate in more detail the operation of the snap-lock mechanism for mounting and locking the damper 10 in the console 80.

In Fig. 7A, the damper 10 is illustrated in its state before the insertion is initiated. In this state, the elastic skirt 36 is un-compressed and the mounting ring 34 is in a position p1 in the longitudinal direction.

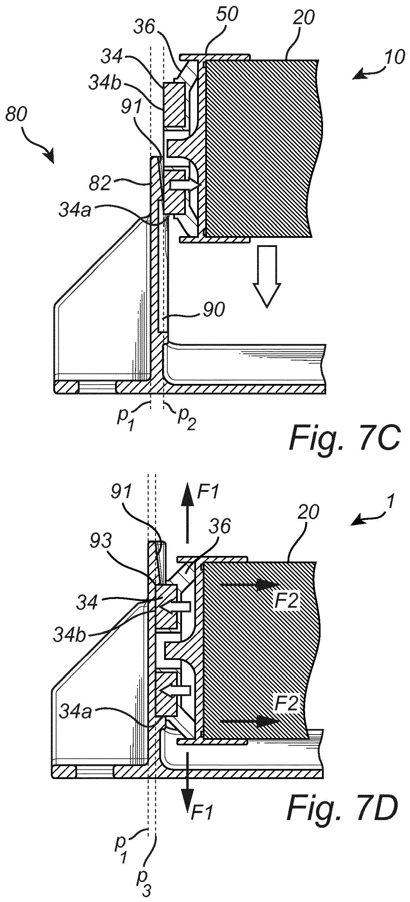

In Fig. 7B, the transverse insertion of the damper 10 into the console 80 has been initiated. Each mounting ring 34 is brought into engagement with the associated beveled guide surface 92 of the console 80. Due to the elastic properties of the elastic skirt 36, the mounting ring 34 is gradually moved axially towards the connector element 50 and the mass element 20 during the insertion phase. The mounting rings 34 are thus gradually forced axially towards each other by the beveled guide surfaces 92, as indicated by arrows in Figs 7B and 7C. During this operation and also in the final mounted assembly, the stiffeners 88 prevent unwanted outward bending of the support portions 82.

In Fig. 7C, the insertion phase has reached a point where the mounting ring 34 has passed over the step 93 of the support portion 82 and the elastic skirt 36 thereby has been compressed to a "maximum" level as indicated by a position p2 in Fig. 7C.

In Fig. 7D, the insertion phase has reached a point where the mass element 20 has been brought into its final mounted position in the console 80. When this insertion position is reached, the snap-lock mechanism is activated under the action of the compressed elastic skirt 36. When the whole mounting ring 34 has passed over the step 93 it will click or snap, under the influence of the compressed elastic skirt 36, into the mounting cavity 91 of the console 80 as indicated by arrows in Fig. 7D. The snap-lock mechanism is now in its locked state in which the mounting ring 34 is in a locking engagement with the mounting cavity 91, preventing the mass element 20 from being disengaged from the console 80 in the transverse direction. As shown in Fig. 7D, the mounting ring 34 will now assume an intermediary position p3 in which the elastic skirt 36 is compressed to a less degree but still biased to maintain the snap-lock mechanism in its locked state.

The forced axial displacement of the mounting rings 34 which occurs during the insertion phase and remains to a certain degree also in the final mounted position not only allows the mounting rings 34 to reach their locked positions in the mounting cavities 91. The axial displacement of the mounting rings 34 also results in that the elastic skirt 36 is maintained in a compressed and/or deformed state, creating radial and axial biasing forces F1, F2 between the wide end 36a of the skirt 36 and the second engagement side 54 of the connector element 50, as indicated with arrows in Fig. 7D.

The elastically compression in the longitudinal direction of the damper element 30 may in this embodiment involve mainly a change of shape of the angled portion 36 (shear forces) as illustrated in Figs 7A to 7D, but optionally also some compression (compression forces) of the elastic material as such.

In the assembled damper 1, the mounting ring 34 will preferably not return fully to its original state in Fig. 7A but will preferably be held biased axially against the mounting cavity 91 under the influence of the elastic skirt 36. As a result, the damper 10 will be held firmly in place in the console 80, the snap-lock mechanism will be held it its locked state, and biasing forces F1 and F2 indicated by arrows in Fig. 7D will create an engagement between elastic damper element 30 and the connector element 50. Specifically, the radially outer engagement surface 36b will be pressed radially outwards into engagement with the inside of the second sleeve 62, and the axially inner engagement surface 36c will be pressed axially into engagement with the wall 62. As a result, each elastic damper element 30 may be firmly engaged with the associated connector element 50, especially without any other means, such as adhesives or vulcanization. It may also be noted that this engagement may be achieved as a direct result of inserting the damper 10 into the console 80, thereby avoiding time and cost for attaching the elastic material 36 to the connector element 50 in some other way before inserting the damper 10 into the console 80.

It will be realized from the above that the elastic properties of the elastic damper element 30 is advantageously used for several purposes or functions in the illustrated embodiment:
The first function is the conventional function of acting as a dampened spring element in the frequency tuned damper.
The second function is to form part of a snap-lock mechanism as described with reference to Figs 7A to 7D, securely locking the damper 10 to the console 80 without the need for any further elements or operations for locking the damper 10 to the console 80.
The third function is to establish an engagement with the connector element 50 due to the angled portion 36 and the biasing forces F1, F2 in the mounted assembly.

During normal damping operation of the damper 10, the damper 10 may be arranged to dampen vibrations of the vibrating structure directed transversely to the longitudinal axis D. During such normal operation, the mass element 20 will vibrate slightly in the transverse direction, involving a slight deflection back and forth of the elastic skirt 36. The distance d in Fig. 1C in the deflection limiting mechanism formed by the deflection limiter 61 and the central opening 35 is preferably selected sufficiently large to prevent any deflection limitation during such normal damping operation. In other words, during normal damping operation, the distance d will be greater than zero.

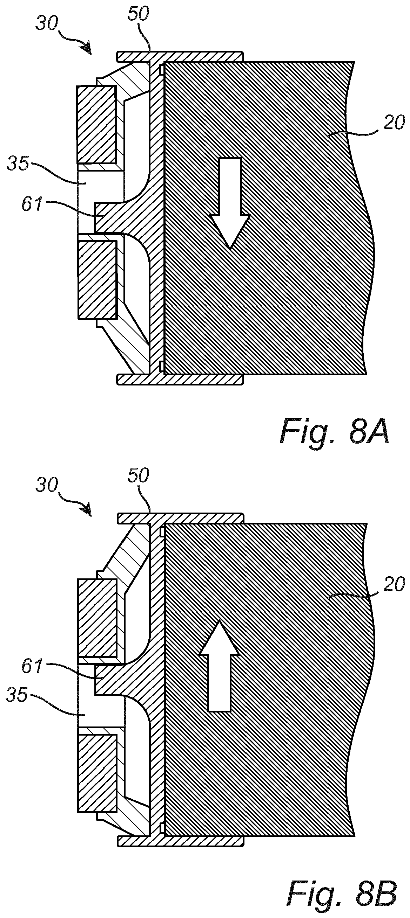

Figs 8A and 8B schematically illustrate the deflection limiting operation. As an illustrative example, the damper 10 may be mounted as a tailgate damper on the inside of a tailgate of a motor vehicle. If the vehicle passes a pothole in the road, the wheels may suddenly go down into and up from the pothole, whereby the damper 10 may be subjected to relatively strong transient forces. Due to the inertia of the mass element 20, the mass element 20 will first move downwards in relation to the opening 35 as indicated by an arrow in Fig. 8A, and thereafter upwards as indicated by an arrow in Fig 8B. In this situation, and if the external transient forces are strong enough, the deflection limiting mechanism will operate. The deflection limiter 61 will first hit or strike against a lower part of the tubular portion 38b of the elastic damper element 30, as shown in Fig. 8A. Thereafter, as the mass element 20 tends to move upwards relative to elastic damper element 30, an upper part of the deflection limiter 61 will in the same way hit or strike against an upper part of the tubular portion 38b of the elastic component 32, as indicated by an arrow in Fig. 8B. This deflection limiting mechanism will prevent excessive transverse movement of the elastic component 32. It will be noted that the present embodiment makes it possible to implement a deflection limiting mechanism in a simple and cost-efficient manner during the assembly of the damper 10, without the need for any further specific deflection-limiting components or assembly operations.

The illustrated first embodiment presents a number advantages relating to the time and cost for the manufacture and assembly as discussed above. However, there are also substantial advantages with respect to tuning options. Fine-tuning may be done by varying one or more parameters of the elastic component 32, such as the material thereof, as well as the wall thickness, the length and/or the angle of the frusto-conical skirt 36. It may also be possible to tune the elastic component 32 by using a plurality of inclined legs instead of a continuous frusto-conical skirt. Larger tuning steps may be obtained by varying the weight of the mass element. The illustrated embodiment makes it possible to easily cut the starting material into mass elements 20 of suitable lengths for providing such larger tuning steps.

### 2^{nd} embodiment

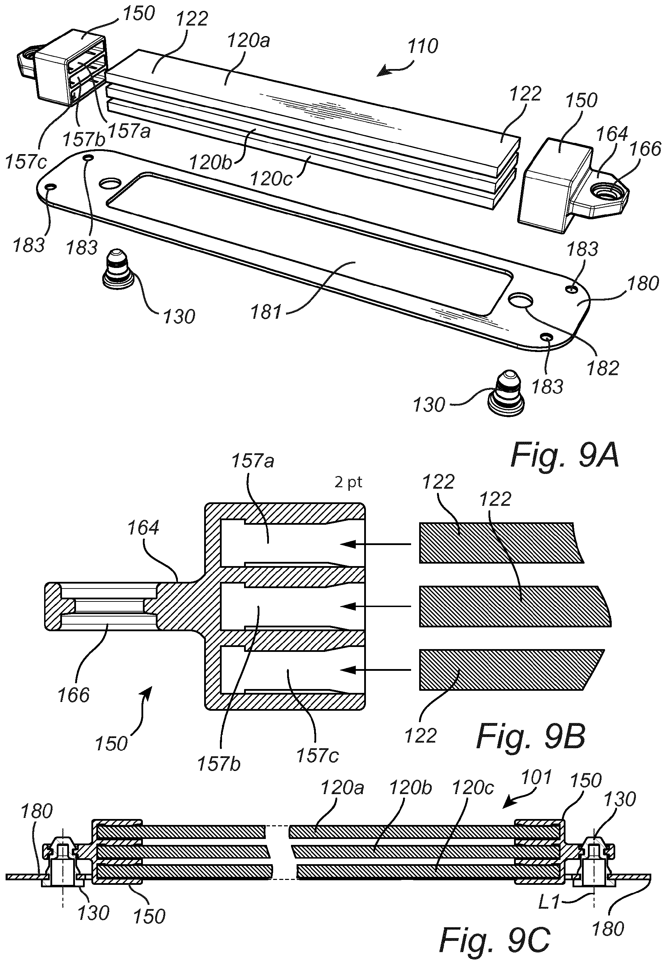

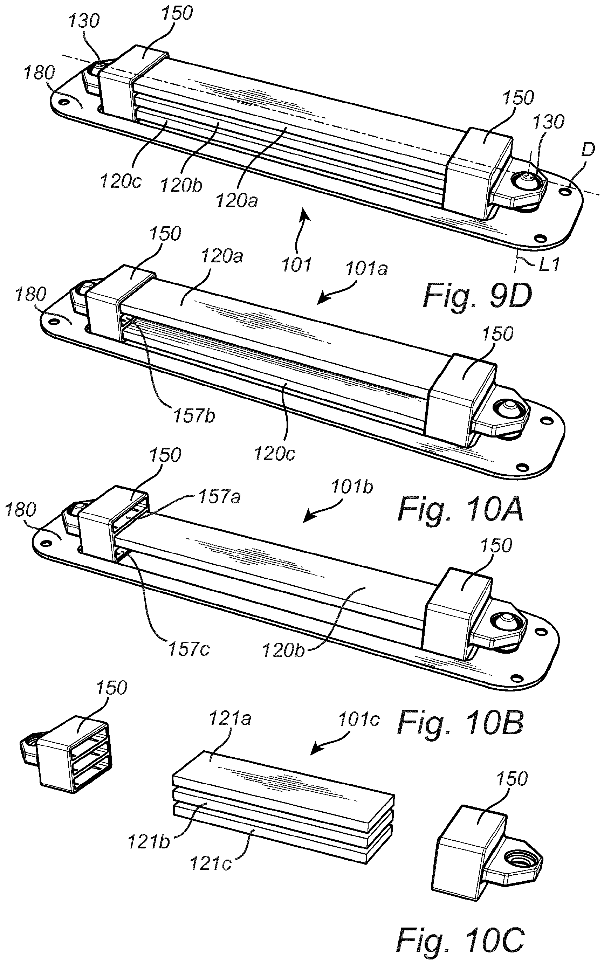

Figs 9A to 9D illustrate a second embodiment of a frequency tuned damper assembly 101. Similar elements are indicated by the same reference numerals as in the first embodiment, plus 100. The statements above regarding the materials and the elasticity/stiffness of the different elements also apply to this second embodiment. The damper assembly 101 comprises a damper 110 formed by a plurality of mass elements 120a-c, two connector elements 150, two elastic damper elements 130, and a console plate 180 for supporting the damper 110 and for mounting the damper assembly 101 to a vibrating structure (not shown). In this embodiment, three mass elements 120a-c of reduced cross-section are used instead of one single larger mass element 20 as in the first embodiment. Each connector element 150 has two or more mass-receiving cavities 157a-c, at least one for each mass element 120a-c. The ends 122a-c of the mass elements 120a-c are press-fitted into associated ones of the mass-receiving cavities 157a-c as indicated in Fig. 9B. In the final damper assembly 101, there is preferably a spacing between the mass elements 120a-c as shown in Fig. 9C. Each connector element 150 further comprises a mounting tab 164 provided with a mounting hole 166 for engagement with the elastic elements 130.

In the second embodiment, the connector elements 150 are in engagement with the elastic damper elements 130 in a different manner compared to the first embodiment. Each damper element 130 is made in one piece of a suitable elastic material, typically silicon rubber, and there is no component corresponding to the mounting ring 34. The shape and the function of the damper elements 130 may be as disclosed in one or more of applicant's disclosures in WO 01/92752 A1, WO 2013/167524 A1 and WO 2008/127157 A1, disclosing elastic damper elements with an inner cavity. Each damper element 130 extends along a longitudinal line L1 and has two mounting grooves: a base groove for engagement with the console plate 180 at a mounting hole 182 thereof, and a top groove for engagement with an associated connector element 150 at a mounting hole 166 thereof. The tuning of the damper elements 130 may be done by varying the wall portion between the mounting grooves, such as the wall thickness and/or the angle of the wall. In the assembled damper 101, the bottom part of the damper 110 is received in a central opening 181 of the console plate 180 with a minor clearance. During normal damping operation, the damper assembly 101 may be arranged to dampen vibrations directed transversally to and/or along the longitudinal direction L1 of the damper elements 130.

The second embodiment in Fig 9A to 9D presents the same advantages as the first embodiment with respect to the intermediary connector elements 150, which makes it possible to avoid the prior-art disadvantages relating to attachment of the elastic elements to the mass element. A further advantage of the second embodiment is that an even greater tuning flexibility may be obtained. By using connector elements 150 comprising multiple mass-receiving cavities 157a-c, the flexibility or variation of tuning steps become even bigger. For obtaining a relatively large tuning step, one or more of the mass elements 120a-c may be dispensed with as illustrated in Figs. 10A and 10B. In the damper assembly 101a in Fig. 10A, the middle mass element 120b has been removed, and in the damper assembly 101b in Fig. 10B, the top and bottom damper elements 120a and 120c have been removed. Fig. 10C illustrates the alternative 101c of using shorter damper elements 121a-c. A further advantage lies in the possibility of using a raw material of reduced cross-section for the mass elements, which may be a cost advantage under certain circumstances.

It also possible to use the principle of connector elements 150 having multiple mass-receiving cavities 157a-c in combination with (i) the snap-lock type mounting in the first embodiment, and/or (ii) the solution in the first embodiment of engaging the silicon rubber part to the connector element by the engagement forces F1 and F2 obtained by an axial biasing the elastic element in the mounted damper assembly.

### 3^{rd} embodiment

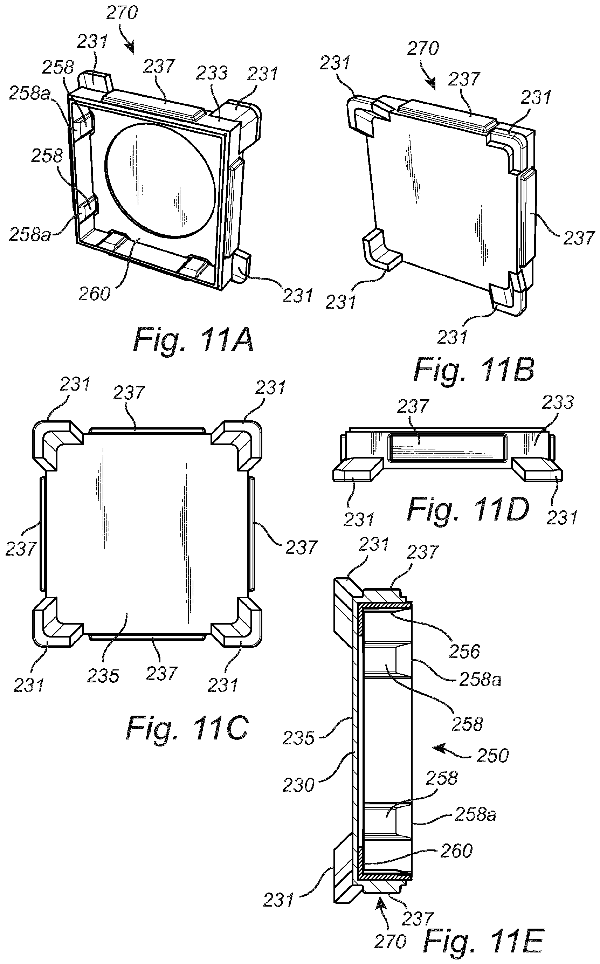

Figs. 11A to 11I illustrate a third embodiment of a frequency tuned damper assembly 201. Similar elements are indicated by the same reference numerals as in the first embodiment, plus 200. The statements above regarding the materials and the elasticity/stiffness of the different elements also apply to this second embodiment. The damper assembly 201 comprises a damper formed by a mass element 220 shaped as a rectangular parallelepiped, two square-shaped connector units 270 and a box-shaped housing 280a, 280b enclosing the damper. Each square-shaped connector unit 270 comprises an elastic damper element 230 and a frame-shaped connector element 250. The elements 230 and 250 are in this embodiment integrally formed into a two-component connector unit 270. In a preferred embodiment, the elastic damper element 230 is made of silicon rubber vulcanized or bonded in some other way to the more rigid connector element 250. In alternative embodiments, the elastic damper element 230 may comprise separate parts. Thus, contrary to the first and second embodiments above, the elastic element 230 and the connector element 250 are already united into one unit before the assembly of the damper is initiated.

The connector element 250 is square-shaped and comprises a square-shaped sleeve or frame 256. Other configurations are obviously also possible depending on e.g. the shape of the mass element 220. The multi-mass element solution in the second embodiment may also be used. The inside of the mass-receiving frame 256 of the connector element 250 is provided with a plurality of press-fit tabs 258, each having a beveled outer end forming a guide surface 258a for an associated end of the mass element 220. The inner surface of the press-fit tabs 258 together form a press-fit surface the dimensions of which substantially corresponds to, but is somewhat smaller than the outer dimensions of the mass element 220. Thereby, the connector element 250 may be brought into direct engagement with an associated end of the mass element 220 by press-fitting the engagement frame 256 over the associated mass end.

The elastic damper element 230, which is integrally bounded to the more rigid connector element 250 by e.g. vulcanization, comprises an angled leg portion 231 at each one of the eight corners, a transversally extending main portion 235, and four side portions 233 covering the sides of the mass-receiving frame 256. Each side portion 233 is provided with a thicker area forming a deflection limiter 237.

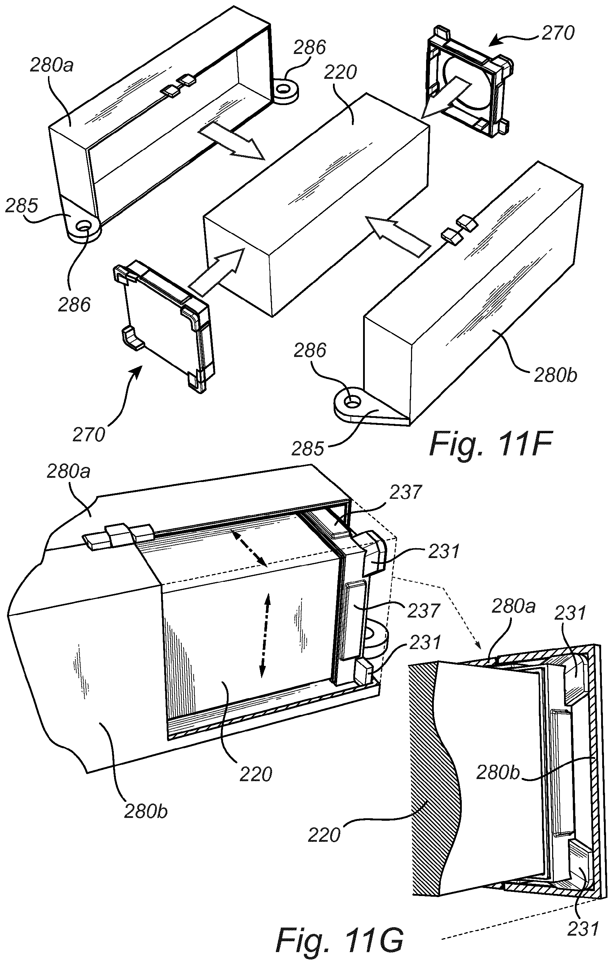

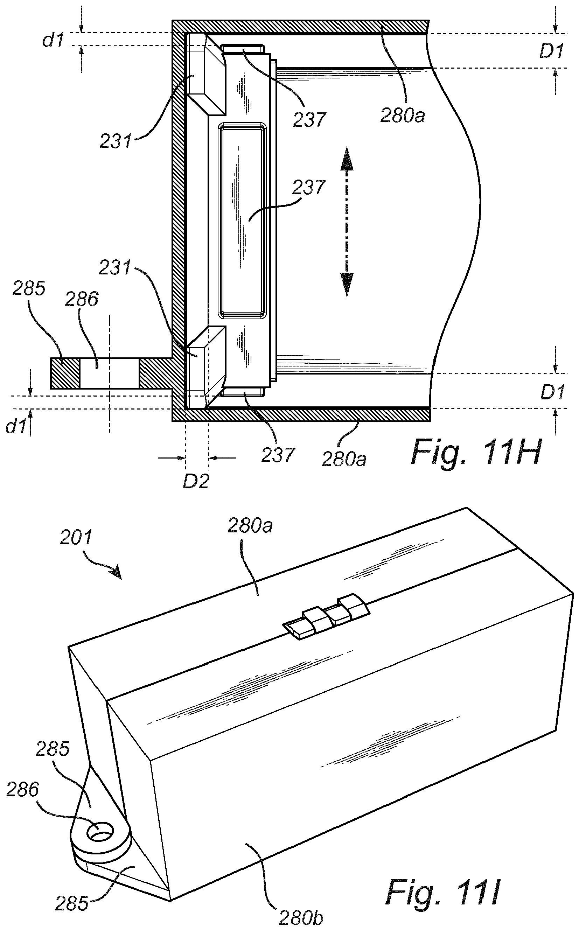

As a first assembly step shown in Fig. 11F, the connector element 250 of each connector unit 270 is press-fitted over an associated end of the mass element 220, thereby forming an assembled damper presenting eight elastic leg portions 231 extending at angles from each one of the eight corners. As a second assembly step also shown in Fig. 11F, the two half-portions 280a and 280b of the housing are fitted around the damper such that each one of the inclined elastic leg portions 231 is brought into engagement with an associated inner corner of the housing 280a, 280b. The mass element 220 is thereby elastically supported in the housing via the connector elements 250 and the elastic damper elements 230. The mass element 220 is held at a transverse distance D1 (Fig. 11H) from the main walls of the housing, and each end of the mass element 220 is held at an axial distance D2 from the end walls of the housing. Each half-portion 280a, 280b of the housing is provided with two locking tabs 285, each having a hole 286 for locking and mounting. When the half-portions 280a, 280b have been put together as shown in Fig. 11I, they may be locked to each other by inserting mounting bolts or screws (not shown) into the holes 286.

During normal damping operation, the mass element 220 may typically vibrate in the transverse directions indicated by arrows in Fig. 11G and 11H. During such normal operation, there will be a transverse distance d1 present between each deflection limiter 237 and a main wall of the housing 280a, 280b. If the damper is subjected to relatively strong transient forces as described above, the mass element 20 will move to such a degree that one or more of the deflection limiters 237 strikes against the inside of the housing, thereby preventing excessive transverse movement of the elastic element 230.

### Alternative embodiments

The embodiments described above and as shown in the figures may be varied in many ways without departing from scope of the claims.

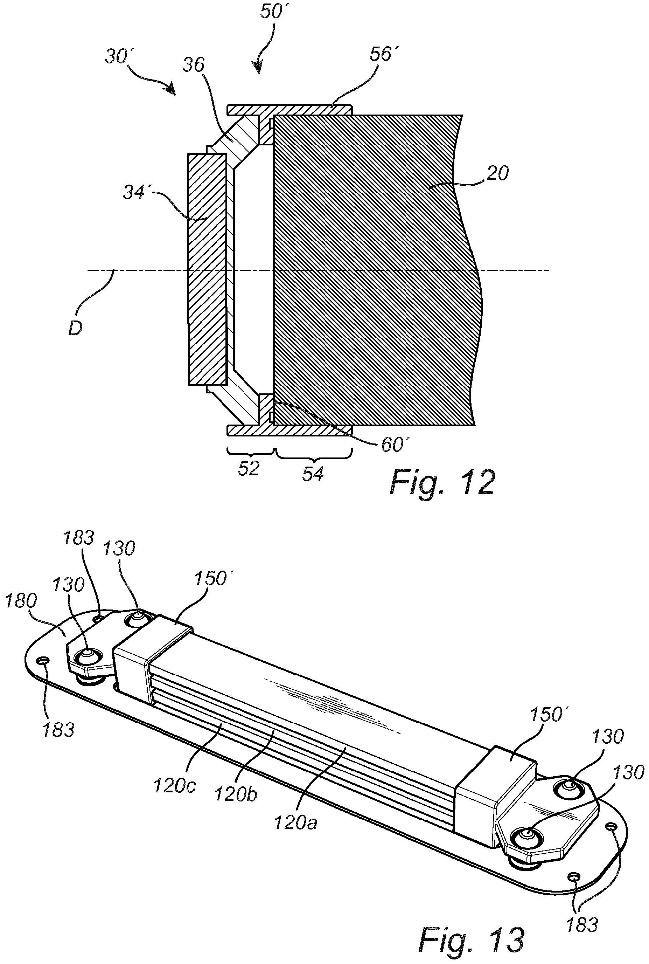

Fig. 12 discloses a variant of the first embodiment with a somewhat modified elastic damper element 30' and a somewhat modified connector element 50'. The modified elastic damper element 30' has no deflection-limiting mechanism. The rigid component is formed as a circular plate 34' integrally formed with the elastic part 32 of the element 30. The connector element 50'differs in that the unbroken wall 60 in the first embodiment is replaced by a ring-shaped wall 60' engaging the end of the mass only around the outer periphery.

Fig. 13 illustrates a variant of the second embodiment shown in Figs. 9A to 9D. In Fig. 13, each connector element 150' has a somewhat wider mounting tab provided with two mounting holes for receiving two elastic elements. This design may be more stable than the design illustrated in Figs. 9A to 9D. Also, the console plate 180 has been made somewhat longer, and is provided with four mounting holes 183.

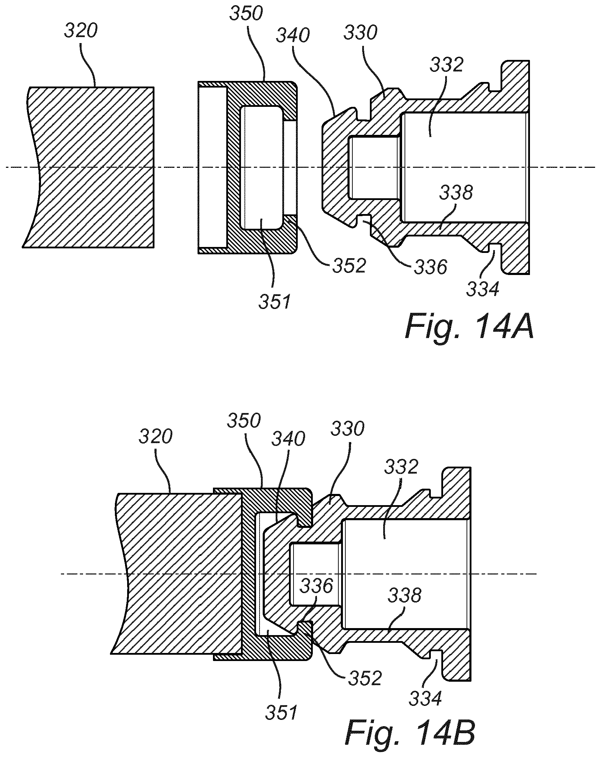

Figs 14A and 14B illustrate a variant in which a connector element 350 is press-fitted onto a mass element 320 as in the previous embodiments, but where the engagement with the damper elements 330 is different. No angled portions are used for the engagement. Instead, the damper elements 330 are of the type described in the prior-art documents mentioned in the introduction and as also used in the embodiment in Figs 9A to 9D. Each damper element 330 has an inner cavity 332, a wider bottom mounting groove 334, less wide top mounting groove 336, an intermediary wall portion 338 between the grooves and a top 340. The adapter 350 is provided with a cavity 351 having a coupling flange 352 at its opening. During the assembly process, the top 340 of the damper element 330 is inserted into the cavity 351 of the connector element 350. The two parts are longitudinally pressed together such that the coupling flange 352 engages the top groove 336. The bottom groove 352 may be connected to the console in the same manner. The advantages of the intermediary connector element 350 are the same as described above in the other embodiments.

In the first embodiment, the angled portion of the elastic part 32 is in the form of a frusto-conical skirt having its wider end facing towards the mass element 20. It may be possible to have the angled portions pointing towards the center line D instead for engagement with some central part of the connector element 50, or a combination of outwardly and inwardly angled components. Also, the skirt 50 could in some embodiments be formed by a plurality of individual legs instead of one single part. Furthermore, it may be possible to bond the silicon rubber to the connector element 50 in some way, e.g. by adhesive, before the assembly of the damper is initiated. It may also be possible to obtain such a pre-engagement by using a skirt 63 which has to be somewhat radially compressed in order to fit into the second cavity 63 of the connector element. In such an embodiment, it may be possible to have no axial biasing from the console in the final mounted state.

In some alternative embodiments, the connector elements may be used in away which presents a further advantage, in addition to the advantages stated above. If the connector elements are designed such that they may be press-fitted onto the mass element to different degrees in the longitudinal direction, i.e. not necessarily to a maximum degree as shown in the previous embodiments, then the connector elements may be used also for compensating for tolerances of the length of the mass element. The total length of the mass element with its two connector elements may then be kept at a precise value by varying the degree of press-fitting, even if there are some tolerance variations of the length of the mass element. This may simplify the manufacturing process of the mass elements, and also ensure that the damper is always held in a correct engagement with the console. The biasing of the elastic damper element will also be kept at a desired, non-varying level. In such embodiments, it will be preferred that the engagement is such that the connector element stays in the desired position in the longitudinal direction in relation to the mass element. The press-fit force may be sufficient if strong enough. It may also be possible to use additional means for keeping the connector element in place.

### Second inventive concept

According to a second inventive concept, there is provided a frequency tuned damper assembly for dampening vibrations of a vibrating structure, said damper assembly comprising:
a damper having a longitudinal direction and including at least two elastic damper elements and at least one mass element, said mass element extending in the longitudinal direction between two opposite ends thereof and being elastically supported at each one of said opposite ends via an associated one of said two elastic damper elements, and said mass element and said two elastic damper elements together forming a spring-mass system which is frequency tuned to vibrations of the vibrating structure; and
a console comprising two support portions, which are mutually spaced in the longitudinal direction and which support the damper therebetween;
wherein each one of the two damper elements is in a biased state by being elastically compressed in the longitudinal direction between the mass element and the support portions of the console; and
wherein each one of the two damper elements comprises at least one angled engagement portion arranged at an interface between the damper element and the mass element, said angled engagement portion extending at an angle in relation to the longitudinal direction and being arranged to convert part of a longitudinal force generated by the biased damper elements into a transverse engagement force.

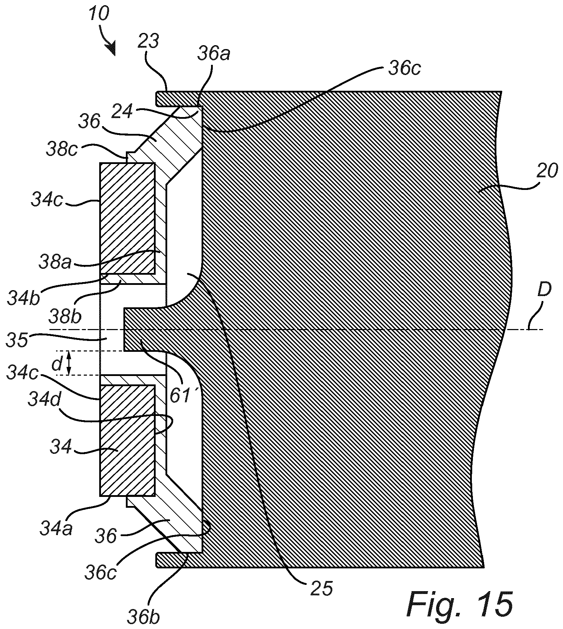

This second inventive concept may be used in console dampers of the disclosed type also without using the first inventive concept of using the intermediary connector elements 50. Fig. 15 illustrates an embodiment of this inventive concept. The skirt 36 of the elastic element 30 engages directly with the mass element 20 instead engaging an intermediary connector element 50 as in the previous embodiments. For this purpose, the mass element 20 is provided with a cavity 25 at each end, defined by a sleeve or ring-shaped wall 23. Relevant options and advantages regarding the angled portion of the elastic element stated in the previous embodiments apply to this second inventive concept also.

## Claims

1. A frequency tuned damper, comprising:
two elastic damper elements which are arranged to be connected to a vibrating structure, the vibrations of which are to be dampened;
at least one mass element extending in a longitudinal direction of the damper between two opposite ends thereof and being elastically supported at each one of said ends via an associated one of said two elastic damper elements;
two intermediate connector elements, wherein each one of said two intermediate connector elements has a first engagement side which is in direct engagement with an associated one of said opposite ends of the mass element by being press-fitted over the associated end along the longitudinal direction, and an opposite second engagement side which is in engagement with an associated one of said two elastic damper elements.

2. The damper according to claim 1, wherein each intermediate connector element on its first engagement side comprises at least one mass-engaging sleeve forming a mass-receiving cavity into which the associated end of the mass element is inserted with a press-fit engagement with the mass-engaging sleeve.

3. The damper according to any of the preceding claims, wherein each intermediate connector element comprises an intermediate wall which is integrally formed with said at least one mass-engaging sleeve, and which extends transversally to said longitudinal direction between the associated end of the mass element and the associated elastic damper element.

4. The damper according to claim 3, wherein an outer periphery of the intermediate wall of each connector element corresponds substantially to an outer periphery of the associated end of the mass element.

5. The damper according to any of the preceding claims, wherein, for providing said engagement between the second engagement side of each one of the two intermediate connector elements and the associated elastic damper element,
- the damper is arranged in a supporting console which exerts a biasing force on each one of the elastic damper elements along the longitudinal direction towards the mass element; and
- each elastic damper element comprises at least one angled engagement portion which extends at an angle to the longitudinal direction and which is in contact with the second side of the associated intermediate connector element, said angled engagement portion being arranged to convert part of said biasing force into a transverse engagement force biasing the angled engagement portion against the connector element in a direction transvers to the longitudinal direction.

6. The damper according to claim 5, wherein:
each intermediate connector element on its second engagement side comprises a second sleeve forming a second cavity into which at least a part of the associated elastic damper element is received; and
wherein each elastic damper element comprises a center portion which extends transversally to the longitudinal direction, and a skirt portion forming said angled engagement portion, said skirt portion extending at an angle from an outer periphery of the center portion and presenting an outer periphery which is biased against an inner side of the second sleeve.

7. The damper according to any of claims 1 to 4, wherein, for providing said engagement between the second engagement side of each one of the two intermediate connector elements and the associated elastic damper element, each elastic damper element being vulcanized to the second engagement side of the associated intermediate connector element.

8. The damper according to any of the preceding claims, wherein the intermediate connector elements are made from more rigid material than the elastic damper elements.

9. The damper according to claim 8, wherein the elastic elements are made from a material comprising rubber, such as silicon rubber; and wherein the intermediate connector elements are made from a material comprising a synthetic resin, such as thermoplastic materials or thermosetting materials.

10. The damper according to any of the preceding claims, wherein the mass element is made at least partly from metal.

11. The damper according to any of the preceding claims, wherein each intermediate connector element on its second engagement side comprises a deflection limiter which extends into an opening of an associated one of the elastic damper elements, and which is arranged to limit the degree of movement of the damper transversally to said longitudinal direction if the damper is subjected to an external transient force sufficient to bring the deflection limiter into contact with the elastic damper element, thereby preventing excessive movements of the elastic damper elements transversally to the longitudinal direction.

12. The frequency tuned damper according to any of the preceding claims, wherein said at least one mass element comprises two or more mass elements which extend parallel to each other in said longitudinal direction; and wherein the first engagement side of each one of said two intermediate connector elements is in direct engagement with associated ends of each one of said mass elements by being press-fitted over each one of said associated ends along the longitudinal direction.

13. A frequency tuned damper assembly, comprising:
a frequency tuned damper according to any of the preceding claims; and
a console having two support portions which are located at a distance from each other along the longitudinal direction of the damper and which are arranged to support the mass element therebetween via said elastic damper elements and said intermediate connector elements.

14. The frequency tuned damper assembly according to claim 13, wherein said two support portions of the supporting console are arranged to exert a biasing force on each one of the elastic damper elements along the longitudinal direction towards the mass element, for providing said engagement between the second engagement side of each one of the two intermediate connector elements and the associated elastic damper element.

15. A method for making a frequency tuned damper, comprising:
providing at least one mass element which extends in a longitudinal direction between two opposite ends thereof;
providing two connector elements, each connector element having a first engagement side and an opposite second engagement side;
providing two elastic damper elements;
press-fitting the first engagement side of each connector element over an associated one of said opposite ends of the mass element for providing an engagement between each connector element and the mass element; and
providing an engagement between the second engagement side of each connector element and an associated one of said two elastic damper elements.

16. The method according to claim 15, wherein the act of providing said at least one mass element comprises cutting said mass element from a longitudinal metal body having a substantial uniform cross-section, and wherein the act of press-fitting the connector elements over the ends of the mass element is performed without any surface treatment of the mass element after said cutting.

17. A frequency tuned damper assembly for dampening vibrations of a vibrating structure, said damper assembly comprising:
a damper having a longitudinal direction and including at least two elastic damper elements and at least one mass element, said mass element extending in the longitudinal direction between two opposite ends thereof and being elastically supported at each one of said opposite ends via an associated one of said two elastic damper elements, and said mass element and said two elastic damper elements together forming a spring-mass system which is frequency tuned to vibrations of the vibrating structure; and
a console comprising two support portions, which are mutually spaced in the longitudinal direction and which support the damper therebetween;
wherein each one of the two damper elements is in a biased state by being elastically compressed in the longitudinal direction between the mass element and the support portions of the console; and
wherein each one of the two damper elements comprises at least one angled engagement portion arranged at an interface between the damper element and the mass element, said angled engagement portion extending at an angle in relation to the longitudinal direction and being arranged to convert part of a longitudinal force generated by the biased damper elements into a transverse engagement force.
